# EUROPEAN PATENT APPLICATION

(11) **EP 2 492 810 A1**
(43) Date of publication of application: **29.08.2012**
(21) Application number: 10838652.5
(22) Date of filing: 18.12.2010
(51) Int. Cl.: G06F 9/48

(54) **METHOD AND DEVICE FOR MANAGING OPERATING SYSTEMS IN EMBEDDED SYSTEM**

(30) Priority: 24.12.2009 CN 200910261692
(71) Applicant: Huawei Device Co., Ltd., Longgang District Shenzhen Guangdong 518129 (CN)
(72) Inventor: ZHANG, Jianchun, Shenzhen Guangdong 518129 (CN)
(74) Representative: Isarpatent
(86) International application number: PCT/CN2010/079971
(87) International publication number: WO 2011/076089

(57) **Abstract**

The present invention relates to the field of mobile communications and discloses a method and an apparatus for managing operating systems in an embedded system to solve the problem of great performance loss and high product complexity caused by the running of multiple operating systems on a single CPU in the prior art. The embedded system in embodiments of the present invention includes at least two operating systems and the method includes: receiving an interrupt instruction; saving the state of a currently running operating system; and switching the currently running operating system to a target operating system corresponding to the interrupt instruction. The method is mainly applicable to the field of mobile communications.

## Description

This application claims priority to Chinese Patent Application No. 200910261692.4, filed with the Chinese Patent Office on December 24, 2009 and entitled "METHOD AND APPARATUS FOR MANAGING OPERATING SYSTEMS IN EMBEDDED SYSTEM", which is incorporated herein by reference in its entirety.

### FIELD OF THE INVENTION

The present invention relates to the field of mobile communications, and in particular, to a method and an apparatus for managing operating systems in an embedded system.

### BACKGROUND OF THE INVENTION

In an embedded system, multiple CPUs (Central Processing Unit, central processing unit) are generally needed to run multiple operating systems. For example, most smart phone platforms use two CPUs to run two operating systems. One CPU runs a smart phone operating system to realize interaction with the user. The other CPU runs a MODEM (MOdulator/DEModulator) operating system to provide the user with MODEM features, such as a wireless protocol stack function.

Where two CPUs are used to run two operating systems in an embedded system, the cost of the embedded system is usually high. In the prior art, a single CPU is used to run two operating systems to reduce the cost and complexity of a system, for example, to spare one set of a CPU, a FLASH memory, and a SDRAM; reduce the complexity of the dual-core bus interface; and reduce the complexity of software.

In the prior art, the following solutions are generally adopted to realize that a single CPU runs multiple operating systems in an embedded system.

1. The virtual CPU technology is used. The virtualization technology is to realize multiple virtual machines on a single CPU and to run the operating systems on the virtual machines. For the operating systems, each virtual machine is a logical CPU and thereby multiple operating systems can run on the single CPU.

To use the virtualization technology, however, a layer of virtual machines should be added on the physical CPU and should be parsed, which may result in great loss of CPU performance.

2. Operating systems are ported on a same microkernel to realize the running of multiple operating systems on a single CPU, where the ported operating systems provide same interface functions as the original operating systems.

With this solution, the operating systems need to be ported on a new microkernel, which generally requires a huge workload. Moreover, when a third party releases an upgraded version of an operating system, only the version can be provided for the original operating system. Therefore, each time when the ported operating system needs to be upgraded, the operating system of the upgraded version needs to be ported again. As a result, the complexity of maintenance of the embedded system is relatively high, porting is required repeatedly, and the workload to be spent is uncontrollable.

### SUMMARY OF THE INVENTION

Embodiments of the present invention provide a method and an apparatus for managing operating systems in an embedded system, so that running of multiple operating systems is realized on a single CPU with less performance loss and lower product complexity.

For the above purpose, the following technical solutions are adopted in the embodiments of the present invention:

A method for managing operating systems in an embedded system, where the embedded system includes at least two operating systems, includes:
receiving an interrupt instruction;
saving the state of a currently running operating system; and
switching the currently running operating system to a target operating system corresponding to the interrupt instruction.

A system switching apparatus includes:
a receiving unit, configured to receive an interrupt instruction;
a saving unit, configured to save the state of a currently running operating system; and
a switching unit, configured to switch the currently running operating system to a target operating system corresponding to the interrupt instruction.

According to the embodiments of the present invention described by the above technical solution, in the embedded system, when multiple operating systems run on a single CPU, a system switching apparatus receives interrupt instructions uniformly; according to the difference of the interrupt instruction, when an operating system switch is needed, the system switching apparatus saves the state of the currently running operating system and switches to the target operating system corresponding to the interrupt instruction; and the target operating system after the switching runs on the physical CPU directly. This not only realizes the switching between multiple operating systems on a single CPU, but also avoids the CPU performance loss caused when a virtual machine is used to simulate the CPU to realize the running of multiple operating systems on the single CPU in the prior art. In addition, because the foregoing technical solution requires few modifications to the multiple operating systems, the workload in maintaining the multiple operating systems is greatly reduced, and the problem that porting of multiple operating systems on a same microkernel causes high complexity of subsequent maintenance of the embedded system in the prior art is resolved. Therefore, the running of multiple operating systems on a single CPU is realized with less performance loss and lower product complexity.

### BRIEF DESCRIPTION OF THE DRAWINGS

FIG. 1 is a flowchart of a method for managing operating systems in an embedded system according to Embodiment 1 of the present invention;

FIG. 2 is a structural diagram of a system switching apparatus according to Embodiment 1 of the present invention;

FIG. 3 is a flowchart of a method for managing operating systems in an embedded system according to Embodiment 2 of the present invention; and

FIG. 4 is a structural diagram of a system switching apparatus according to Embodiment 2 of the present invention.

### DETAILED DESCRIPTION OF THE EMBODIMENTS

The technical solutions of the embodiments of the present invention are described clearly and completely in the following with reference to the accompanying drawings. Apparently, the embodiments to be described are only some rather than all of the embodiments of the present invention. Based on the embodiments of the present invention, persons of ordinary skill in the art can derive other embodiments without creative efforts and such other embodiments all fall within the scope of the present invention.

### Embodiment 1

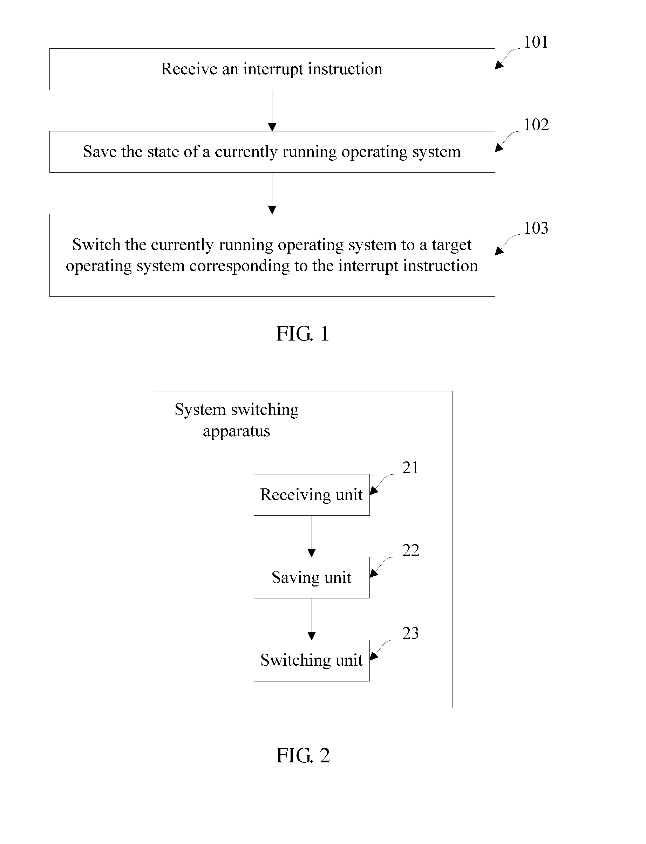

This embodiment of the present invention provides a method for managing operating systems in an embedded system, where the embedded system includes at least two operating systems that run on a single CPU. As shown in FIG. 1, the method includes the following steps:

101: A system switching apparatus receives an interrupt instruction. Because the at least two operating systems run on the single CPU, an operating system does not invoke an interrupt processing program directly, but, instead, the system switching apparatus uniformly takes over all or a part of the interrupt processing programs of the operating systems and invokes an interrupt processing program of the operating system to process the interrupt instruction. When an interrupt instruction arrives, the interrupt instruction is uniformly received by the system switching apparatus rather than the currently running operating system, which avoids the problem that the interrupt instruction cannot be processed when the received interrupt instruction cannot be executed in the currently running operating system.

102: If after receiving the interrupt instruction, the system switching apparatus judges, according to the interrupt instruction, that operating system switching is required, save the state of the currently running operating system. Because the interrupt instruction includes an identifier of a corresponding target operating system, different interrupt instructions are processed in different corresponding operating systems. By judging this identifier, it can be determined which operating system specifically executes the interrupt instruction. Then the state of the currently running operating system is saved, so that when the currently running operating system needs to be restored, the operating system before the switching can be quickly and conveniently restored.

103: The system switching apparatus switches the currently running operating system to the target operating system corresponding to the interrupt instruction. Different interrupt instructions are processed in different corresponding operating systems. When the received interrupt instruction does not correspond to the currently running operating system, the system switching apparatus may conveniently switch to the target operating system corresponding to the received interrupt instruction, ensuring that the received interrupt instruction is processed by the correct operating system. After the switching by the system switching apparatus, the operating system before the switching is saved and in a temporal suspended state and the target operating system after the switching will directly run on the single CPU, which avoids the CPU performance loss caused by the simulation of a virtual machine. In addition, because the above method requires few modifications to the multiple operating systems, the workload in the maintenance of the multiple operating systems is greatly reduced, and the complexity of maintenance of the embedded system is reduced.

To implement the method, an embodiment of the present invention provides a system switching apparatus. As shown in FIG. 2, the apparatus includes a receiving unit 21, a saving unit 22, and a switching unit 23.

The receiving unit 21 is configured to receive an interrupt instruction. Different interrupt instructions correspond to different operating systems. When the interrupt instruction received by the receiving unit 21 does not correspond to the currently running operating system, the saving unit 22 is configured to save the state of the currently running operating system. The saving unit 22 saves the state of the currently running operating system, so that when the currently running operating system needs to be restored, the operating system before the switching can be quickly and conveniently restored. Then the switching unit 23 switches the currently running operating system to the target operating system corresponding to the interrupt instruction. The target operating system after the switching by the switching unit 23 will directly run on the single CPU. There by, the running of multiple operating systems on a single CPU is realized with less performance loss and lower product complexity.

### Embodiment 2

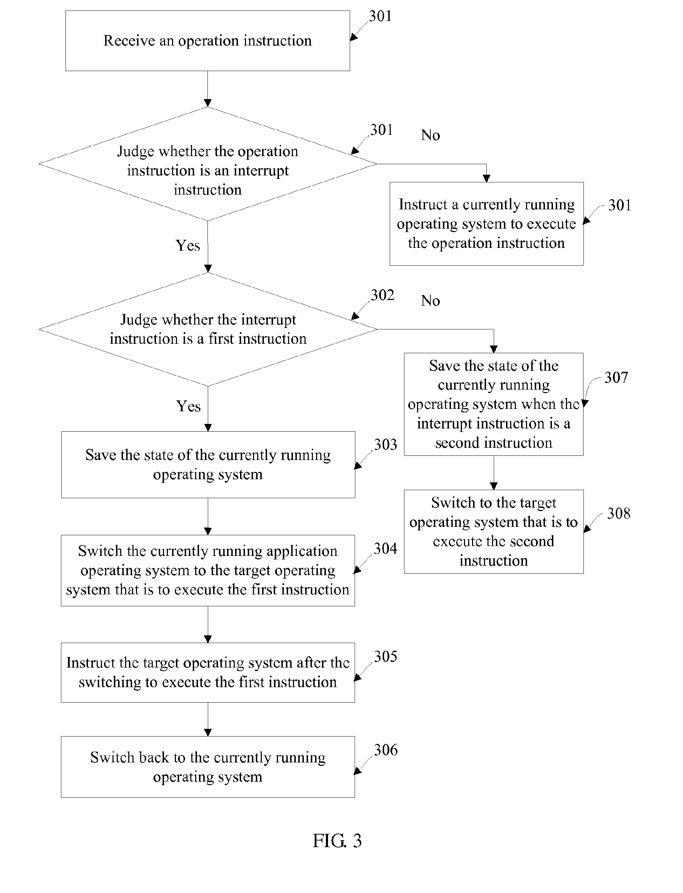

It can be known from Embodiment 1, the embedded system includes at least two operating systems. In this embodiment, it is assumed that two operating systems run on a single CPU on a smart phone platform, where one is an application operating system for the running of applications and the other is a MODEM operating system that provides functions of a wireless protocol stack. According to different sources of interrupt instructions, the interrupt instruction may be a first instruction sent from outside the operating system or a second instruction sent by the operating system. In this embodiment, a method for managing operating systems in an embedded system is described in detail with the interrupt instruction being a first instruction sent from outside the operating system. As shown in FIG. 3, the method includes the following steps:

301: When an operation instruction arrives, the system switching apparatus receives the operation instruction uniformly and judges whether the operation instruction is an interrupt instruction. The uniform receiving of the operation instruction by the system switching apparatus avoids the problem that the received operation instruction cannot be processed when the operation instruction cannot be executed in the currently running operating system.

When judging that the operation instruction is not an interrupt instruction, instruct the currently running operating system to execute the operation instruction directly. For example, assuming the operation instruction is a keystroke instruction of a user, after the currently running application operating system receives the keystroke instruction of the user, because the user keystroke instruction is executed by the application operating system, it is not required to switch the operating system and the currently running application operating system executes the user keystroke instruction directly.

302: When judging that the operation instruction is an interrupt instruction, further judge whether the interrupt instruction is a first instruction coming from outside the currently running operating system. The first instruction may be a user keystroke instruction to be executed in an application operating system, or a download instruction or call connection request instruction to be executed in a MODEM operating system.

303: When the system switching apparatus judges that the interrupt instruction is a first instruction coming from outside the currently running operating system. For example, the received first instruction is an instruction for performing a download task. Assuming the currently running operating system is an application operating system, because the received first instruction is the instruction for performing the download task, where the first instruction needs to be executed in a MODEM operating system, it is required to switch the operating system. Before switching the operating system, the system switching apparatus saves the state of the currently running operating system.

The system switching apparatus saves the state of the currently running operating system, so that when the currently running operating system needs to be restored, the operating system before the switching can be quickly and conveniently restored.

304: The system switching apparatus switches the currently running operating system to the MODEM operating system that is to execute the first instruction.

305: After the switch to the MODEM operating system, the system switching apparatus instructs the MODEM operating system to execute the first instruction. The MODEM operating system executes the download instruction by invoking the interrupt processing program.

306: After the MODEM operating system finishes executing the first instruction, the MODEM operating system receives a third instruction, where the third instruction is used for switching from the target operating system back to the currently running operating system. Then, the system switching apparatus switches the target operating system back to the currently running operating system according to the third instruction and the saved state of the currently running operating system.

307. When judging that the operation instruction is an interrupt instruction and that the interrupt instruction is not a first instruction from outside the currently running operating system, further judge whether the interrupt instruction is a second instruction that comes from the currently running operating system and is used to switch the operating system. Because the interrupt instruction may also be a second instruction sent by the operating system, for example: when the currently running operating system wants to give up the CPU control right, a initiative switch between operating systems is realized through a switching interface, where
the second instruction implements a function of switching the operating system to the target operating system corresponding to the second instruction. For example, the currently running application operating system wants to be switched to the MODEM operating system directly.

When judging that the interrupt instruction is the second instruction that comes from the currently running operating system and is used to switch the operating system, save the state of the currently running operating system.

308. Switch the currently running operating system to the target operating system indicated by the second instruction.

The system switching apparatus switches the currently running operating system to the target operating system corresponding to the interrupt instruction. The operating system active before the switching is saved and in a temporal suspended state, and the target operating system after the switching runs on the single CPU directly, which avoids the loss of CPU performance caused by the simulation of a virtual machine. In addition, because the above method requires few modifications to the multiple operating systems, the workload in the maintenance of the multiple operating systems is greatly reduced, and the complexity of subsequent maintenance of the embedded system is reduced, and the running of multiple operating systems on a single CPU is realized with less performance loss and lower product complexity.

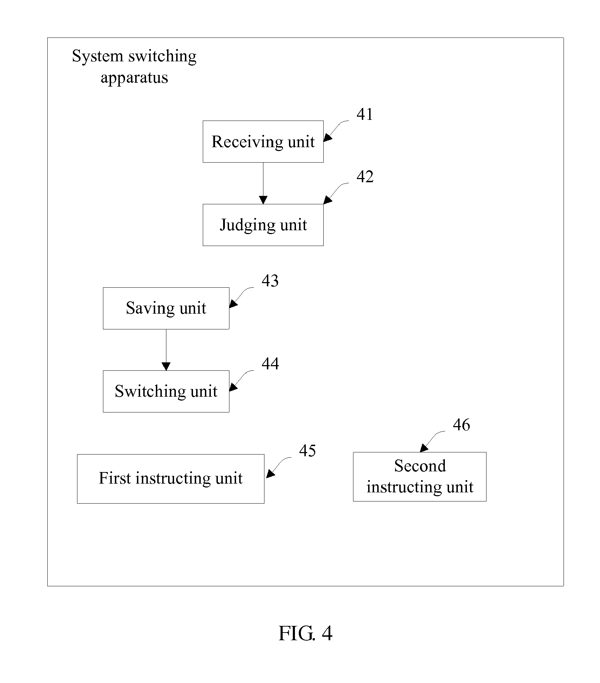

An embodiment of the present invention also provides a system switching apparatus. As shown in FIG. 4, the apparatus includes a receiving unit 41, a judging unit 42, a saving unit 43, a switching unit 44, a first instructing unit 45, and a second instructing unit 46.

The receiving unit 41 is configured to receive an operation instruction uniformly when the operation instruction arrives. The operation instruction is uniformly received by the system switching apparatus rather than the currently running operating system, which avoids the problem that the interrupt instruction cannot be processed when the received interrupt instruction cannot be executed in the currently running operating system. Then, the judging unit 42 is configured to whether the operation instruction received by the receiving unit 41 is an interrupt instruction. When the judging unit 42 judges that the operation instruction is not an interrupt instruction, the second instructing unit 46 is configured to instruct the currently running operating system to execute the operation instruction directly.

When the judging unit 42 judges that the operation instruction is an interrupt instruction, the judging unit 42 is further configured to judge whether the interrupt instruction is a first instruction from outside the currently running operating system. When the interrupt instruction is a first instruction sent from outside the currently running operating system, the saving unit 43 is configured to save the state of the currently running operating system to help to quickly and conveniently restore the operating system before the switching when the currently running operating system needs to be stored. Then the switching unit 44 is configured to switch the currently running operating system to the target operating system corresponding to the first instruction. The first instructing unit 45 is configured to instruct the target operating system after the switching to execute the first instruction.

When the target operating system after the switching finishes executing the first instruction, the receiving unit 41 is further configured to receive a third instruction used for switching from the target operating system back to the currently running operating system. Then, the switching unit 44 is further configured to switch the target operating system back to the currently running operating system according to the third instruction and the saved state of the currently running operating system. In this way, not only the switching from the current operating system to the target operating system is realized, but also the quick switching back to the currently running operating system is realized when it is required to restore the operating system before the switching.

Because the operation instruction may also be a second instruction sent by the current operating system, for example, an initiative switch between operating systems is realized through a switching interface when the currently running operating system wants to give up the CPU control right. When the judging unit 42 judges that the operation instruction is an interrupt instruction, the judging unit 42 is further configured to judge whether the interrupt instruction is a second instruction that is sent by the currently running operating system and used to switch the operating system. When the interrupt instruction is a second instruction that is sent by the currently running operating system and used to switch the operating system, the saving unit 43 is further configured to save the state of the currently running operating system. Then, the switching unit 44 is further configured to switch the currently running operating system to the target operating system corresponding to the second instruction. Thereby, the running of multiple operating systems on a single CPU is realized.

In the embodiment of the present invention, the system switching apparatus may be used in a mobile terminal that includes operating systems in an embedded system, to realize the running and switching of at least two operating systems on a single CPU in the mobile terminal, where the mobile terminal may be a smart mobile phone or a personal digital assistant, PDA.

The embodiments of the present invention are mainly applicable to the field of mobile communications, where the running of multiple operating systems on a single CPU in an embedded system is realized with less performance loss and lower product complexity.

Through the foregoing description of the implementation manners, those skilled in the art can clearly understand that the present invention can be implemented by software with required universal hardware or by hardware, but the former is a preferred implementation manner in most circumstances. Based on such understanding, the essence of the technical solutions of the embodiments of the present invention or the part contributing to the prior art may be embodied in the form of a software product. The computer software product is stored in a readable storage medium, such as a floppy disk, a hard disk, or a CD-ROM in a computer, and includes several instructions that instruct a computer device (such as a personal computer, a server, or a network device) to execute the method described in the embodiments of the present invention.

What is described above is only some preferred embodiments, but not intended to limit the present invention. Any modification, equivalent replacement, or improvement within the spirit and scope of the present invention shall fall within the protection scope of the present invention.

## Claims

1. A method for managing operating systems in an embedded system, wherein the embedded system comprises at least two operating systems and the at least two operating systems run on a single CPU, and the method comprises:
receiving, by a system switching apparatus, an interrupt instruction;
saving the state of a currently running operating system, if judging, according to the interrupt instruction, that it is required to switch the operating system; and
switching, by the system switching apparatus, the currently running operating system to a target operating system corresponding to the interrupt instruction.

2. The method for managing operating systems in an embedded system according to claim 1, further comprising:
judging whether the interrupt instruction is a first instruction from outside the currently running operating system.

3. The method for managing operating systems in an embedded system according to claim 2, further comprising:
instructing the target operating system after the switching to execute the first instruction.

4. The method for managing operating systems in an embedded system according to claim 1, further comprising:
judging whether the interrupt instruction is a second instruction that comes from the currently running operating system and is used to switch the operating system.

5. The method for managing operating systems in an embedded system according to claim 1, further comprising:
receiving an operation instruction;
judging whether the operation instruction is an interrupt instruction; and
when the operation instruction is not an interrupt instruction, instructing the currently running operating system to execute the operation instruction directly.

6. The method for managing operating systems in an embedded system according to any one of claims 1 to 4, further comprising:
receiving a third instruction, wherein the third instruction is used for switching from the target operating system back to the currently running operating system; and
switching the target operating system back to the currently running operating system according to the third instruction and the saved state of the currently running operating system.

7. A system switching apparatus, comprising:
a receiving unit, configured to receive an interrupt instruction;
a saving unit, configured to save the state of a currently running operating system; and
a switching unit, configured to switch the currently running operating system to a target operating system corresponding to the interrupt instruction.

8. The system switching apparatus according to claim 7, further comprising:
a judging unit, configured to judge whether the interrupt instruction is a first instruction from outside the currently running operating system.

9. The system switching apparatus according to claim 8, further comprising:
a first instructing unit, configured to instruct the target operating system after the switching to execute the first instruction.

10. The system switching apparatus according to claim 7, wherein:
the judging unit is further configured to judge whether the interrupt instruction is a second instruction that comes from the currently running operating system and is used to switch the operating system.

11. The system switching apparatus according to claim 7, wherein the receiving unit is further configured to receive an operation instruction and the judging unit is further configured to judge whether the operation instruction is an interrupt instruction; and
the apparatus further comprises a second instructing unit, configured to instruct the currently running operating system to execute the operation instruction directly when the operation instruction is not an interrupt instruction.

12. The system switching apparatus according to any one of claims 7-10, wherein the receiving unit is further configured to receive a third instruction, wherein the third instruction is used for switching from the target operating system back to the currently running operating system; and
the switching unit is further configured to switch the target operating system back to the currently running operating system according to the third instruction and the saved state of the currently running operating system.

13. A mobile terminal comprising operating systems in an embedded system, wherein the embedded system comprises at least two operating systems, and the at least two operating systems run on a single CPU, and a system switching apparatus according to any one of claims 7-12, wherein the system switching apparatus is configured to perform switching of the at least two operating systems.
